# EUROPEAN PATENT SPECIFICATION

(11) **EP 4 461 447 B1**
(45) Date of publication and mention of the grant of the patent: **10.09.2025**
(21) Application number: 24174321.0
(22) Date of filing: 06.05.2024
(51) Int. Cl.: B23D 45/16, B27B 5/38, B23D 47/12

(54) **POWER CUTTING MACHINE**
ELEKTRISCHE SCHNEIDMASCHINE
MACHINE DE COUPE ÉLECTRIQUE

(30) Priority: 08.05.2023 JP 2023076623
(43) Date of publication of application: 13.11.2024
(73) Proprietor: Yamabiko Corporation, Ohme-shi Tokyo 198-8760 (JP)
(72) Inventor: Umetani, Kazuhiro, Tokyo, 198-8760 (JP); Miyamoto, Tadafumi, Tokyo, 198-8760 (JP)
(74) Representative: Canzler & Bergmeier Patentanwälte Partnerschaft mbB

(56) References cited:
- DE-A1- 102014 007 878
- JP-A- 2011 251 348
- US-A1- 2010 140 025
- US-A1- 2015 260 241
- US-A1- 2016 223 035
- US-A1- 2022 212 330

## Description

### BACKGROUND

### 1. Technical field

The present invention relates to a power cutting machine.

### 2. Related Art

A power cutting machine is a working machine configured to cut objects with a cutting blade by transmitting power of a motor such as an engine and an electric motor to the cutting blade to drive the cutting blade. Examples of the power cutting machine include a concrete cutter to cut concrete and asphalt and a chain saw to cut wood and trees.

A conventional power cutting machine includes a main body including a motor such as an engine, an arm including a belt transmission mechanism configured to transmit power of the motor to the head end of the arm, and a working device including a cutting blade configured to be driven by power transmitted to the head end of the arm. A handheld power cutting machine generally includes a rear handle provided on the rear side of the main body, and a front handle provided on the head side of the main body.

Depending on a type of power cutting machine, such as a concrete cutter, uses a cutting blade having a large inertial force for a hard object to cut. This sort of power cutting machine is known to include a brake controller provided in the main body to stop the rotation of the cutting blade immediately after the motors stops (see Japanese Patent Application Laid-Open No. 2011-251348).

When the cutting blade of the above-described power cutting machine is subject to a large load, for example, the cutting blade is caught in a cut during cutting work, the reaction force of the load acts on the cutting blade. Then, the cutting blade provided on the head end of the power cutting machine may be recoiled from the object, which is a phenomenon called as "kickback." Especially in the case of a handheld power cutting machine, the kickback causes the cutting blade to approach the worker holding the handle. Therefore, it is necessary to take measures to prevent the kickback for safety work.

However, the brake mechanism in the above-described prior art is provided in a clutch drum of a centrifugal clutch which is directly connected to the driving shaft of the engine; therefore, the brake mechanism cannot be applied to electric products not requiring clutch drums and products even with clutch drums depending on their positions. In addition, the brake mechanism is actuated to stop the rotation of the cutting blade by detecting a throttle lever not operating after the engine stops; therefore, the brake mechanism is ineffective against the kickback which suddenly occurs during cutting work, that is, during the operation of the motor. A power cutting machine according to the preamble of claim 1 is known from document US 2010/140025 A1.

### SUMMARY

The present invention is proposed to address these problems. Therefore, the objects of the invention are to make it possible to apply a brake mechanism regardless of a type of motor used in a power cutting machine and to take an effective measure against a kickback.

To solve the above-described problems, the present invention provides a power cutting machine including a main body including a motor, an arm connected to the main body at its base end and including a belt transmission mechanism configured to transmit drive power of the motor, and a working device connected to the head end of the arm and including a cutting blade configured to be rotated by power transmitted via the belt transmission mechanism. The working device includes a brake mechanism configured to be actuated when the cutting blade is subject to overload and apply a brake to the cutting blade.

According to the invention having the above-described features, a power cutting machine can apply a brake to a cutting blade even though a motor is being driven; therefore, it is possible to effectively prevent a kickback during cutting work. In addition, a brake mechanism is provided in a working device bouncing up due to the kickback. Therefore, it is possible to actuate the brake mechanism upon detecting the working device bouncing up and to take an effective measure against the kickback. Also, it is applicable regardless of a type of motor in a main body.

### BRIEF DESCRIPTION OF THE DRAWINGS

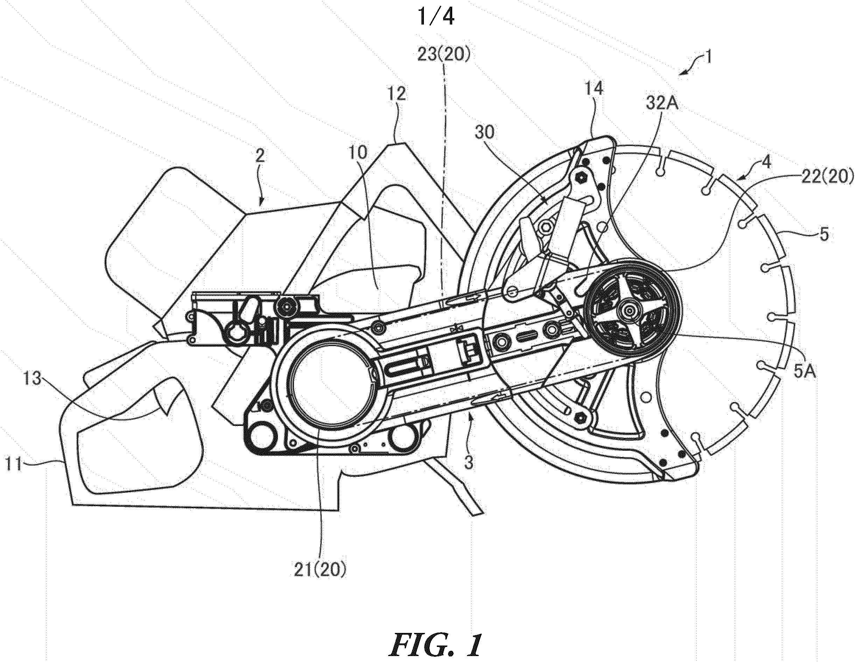

Fig. 1 is an illustration of a power cutting machine according to an embodiment of the invention;
Fig. 2 is an illustration of a brake mechanism not being actuated;
Fig. 3 is an illustration of the brake mechanism being actuated; and
Fig. 4 is a cross-sectional view for illustrating a modification of the brake mechanism.

### DETAILED DESCRIPTION

Hereinafter, an embodiment of the present invention will be described with reference to the drawings. The same reference numbers in the different drawings indicate the same functional parts, and therefore repeated description for each of the drawings is omitted.

A power cutting machine 1 includes a main body 2, an arm 3, and a working device 4. The main body 2 includes a motor 10 such as an engine and an electric motor. The base end of the arm 3 is connected to the main body 2, and the head end of the arm 3 is connected to the working device 4. The arm 3 includes a belt transmission mechanism 20 configured to transmit drive power of the motor 10. The working device 4 includes a cutting blade 5 connected to the head end of the arm 3 and configured to be rotated by power transmitted via the belt transmission mechanism 20.

The output shaft of the motor 10 provided in the main body 2 is connected to a drive pulley 21 of the belt transmission mechanism 20 via a well-known clutch mechanism. The belt transmission mechanism 20 includes the drive pulley 21, a driven pulley 22 provided in the head end of the arm 3, and an endless belt 23 wound around these pulleys. A rotating shaft 5A of the cutting blade 5 is connected to the driven pulley 22 to transmit power of the motor 10 to the cutting blade 5 via the belt transmission mechanism 20.

The main body 2 includes a rear handle 11 and a front handle 12 as handle parts. The rear handle 11 is provided on the rear side of the main body 2, which is close to the operator's body when the operator uses the power cutting machine 1; an actuating lever 13 of the motor 10 is provided inside the rear handle 11. When the motor 10 is an engine, the actuating lever 13 is a throttle lever. The front handle 12 is provided on the head side of the main body 2 and extends along the direction orthogonal to the longitudinal direction of the arm 3. The working device 4 includes a protecting frame 14. The protecting frame 14 is fixed to the head end of the arm 3 and configured to cover the half circle of the cutting blade 5. This power cutting machine 1 includes a brake mechanism 30 provided in the working device 4 at the head end of the machine.

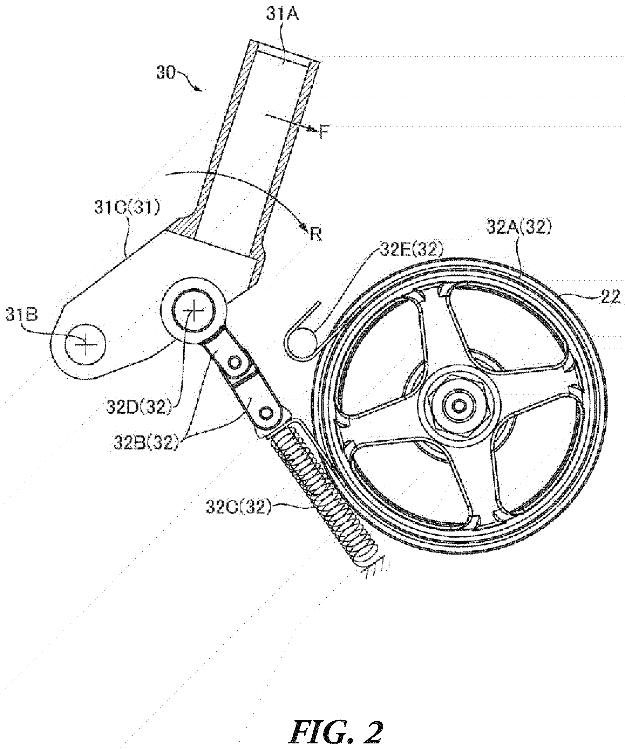

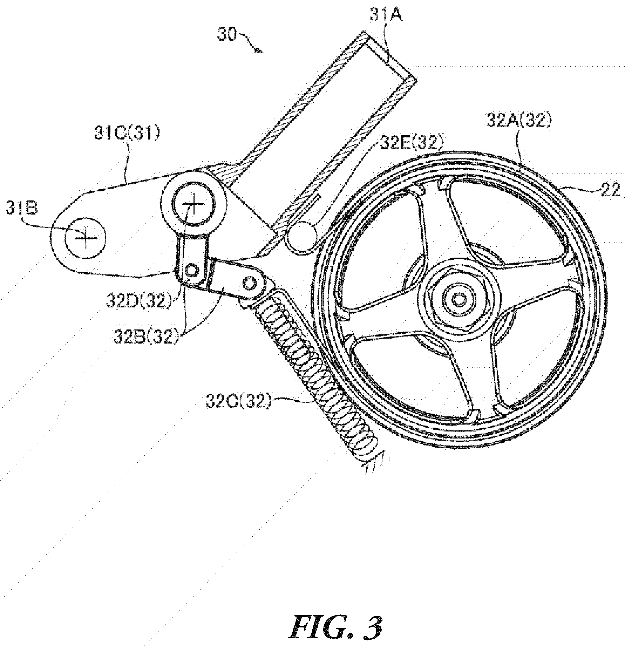

As illustrated in Fig. 2 and Fig. 3, the brake mechanism 30 includes a detection mechanism 31 configured to detect the working device 4 bouncing up and a tightening mechanism 32 configured to be actuated upon detection of the detection mechanism 31 to tighten a tightening belt 32A wound around the driven pulley 22.

The detection mechanism 31 includes a swing lever 31C configured to pivotally support a mass part 31A around a rotating shaft 31B. Fig. 2 is an illustration of an initial state of the detection mechanism 31. In this state, when the working device 4 bounces up, an inertial force F acts on the mass part 31A to swing the swing lever 31C pivotally supported around the rotating shaft 31B in the direction of arrow R.

Meanwhile, the tightening mechanism 32 includes bending members 32B configured to bend along with the swing of the swing lever 31A and pull one end of the tightening belt 32A. In the initial state of the swing lever 31C illustrated in Fig. 2, the bending members 32B are formed in a straight line, and one end of the bending members 32B is supported by a spring 32C. When the swing lever 31C swings as illustrated in Fig. 3, one of the bending members 32B pivotally supported around a rotating shaft 32D at the other end is bent. Then, the linking part of the bending members 32B bends and releases the spring force caused by the compression of the spring 32C which is a strong compression spring. Therefore, the tightening belt 32A is instantly tightened.

One end of the tightening belt 32A of the tightening mechanism 32 is connected to the bending members 32B, and the other end is fixed to a fixed shaft 32E in the housing of the working device 4. By this means, the tightening belt 32A naturally tightens the outer circumference of the driven pulley 22 to apply a brake to the driven pulley 22 when the bending members 32B are bent to tighten the tightening belt 32A.

According to the power cutting machine 1 as described above, the brake mechanism 30 is actuated upon detection of a bounce when the working device 4 bounces up due to a kickback during cutting work and applies a brake to the driven pulley 22. Therefore, the power cutting machine 1 can stop the rotation or reduce the speed of the cutting blade 5 connected to the driven pulley 22 without stopping the motor 10. In addition, the brake mechanism 30 is provided in the working device 4 provided at the head end of the power cutting machine 1; therefore, it is possible to directly detect the working device 4 bouncing up due to the kickback and actuate the brake mechanism 30. Thus, the power cutting machine 1 can implement an effective measure against the kickback.

The power cutting machine 1 according to the invention has a structure in which the brake mechanism 30 is directly provided on the head end of the machine. This structure is applicable to an electrically-driven machine without a clutch drum in the main body 2 and an engine-driven machine not allowing a brake mechanism to be provided around a clutch drum depending on its position. Furthermore, the brake mechanism 30 is directly provided in the working device 4 in the present invention. There are no drive power transmission mechanisms such as an endless belt between the brake mechanism 30 and the cutting blade 5. Therefore, a delay in stopping the cutting blade 5 due to an intervening component is avoidable. In contrast, the brake mechanism 30 is provided on the base end of the arm 3 in the prior art. The brake mechanism 30 stops the rotation or reduces the speed of the cutting blade 5 by applying a brake to the driven pulley 22 provided in the head end of the arm 3. Therefore, a delay in stopping the cutting blade 5 due to the slip of the endless belt 23 wound around the arm 3 is unavoidable.

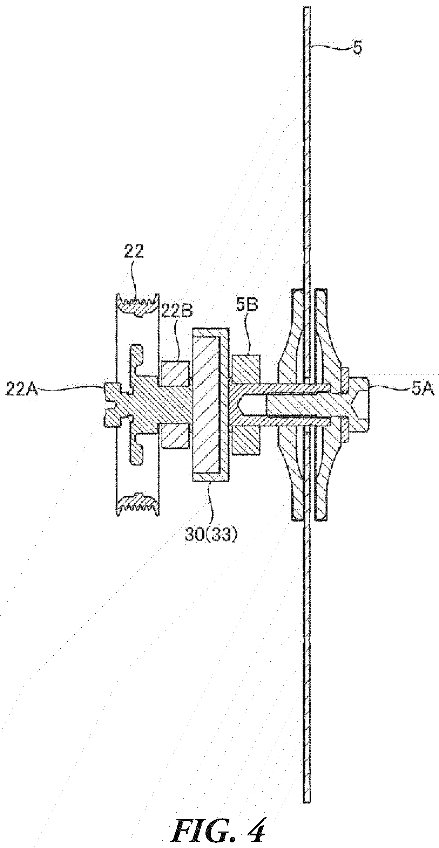

The brake mechanism 30 of the power cutting machine 1 is not limited to the above-described mechanism including the detection mechanism 31 and the tightening mechanism 32. As another example illustrated in Fig. 4, the brake mechanism 30 may be configured with a torque limiter 33 provided between the rotating shaft 5A of the cutting blade 5 and a transmission shaft 22A of the driven pulley 22. The driven pulley 22 side of the torque limiter 33 is connected to the transmission shaft 22A, which is rotatably supported by a bearing 22B; the cutting blade 5 side of the torque limiter 33 is connected to the rotating shaft 5A, which is rotatably supported by a bearing 5B.

In this case, when the cutting blade 5 is subject to overload, for example, the cutting blade 5 is caught in a cut, the torque limiter 33 works to shut off power transmitted to the cutting blade 5. By this means, the torque limiter 33 works to shut off power transmitted to the cutting blade 5 depending on an increase in overload which applies to the cutting blade 5 before a kickback occurs. Consequently, it is possible to prevent the kickback from occurring.

As described above, the embodiments of the present invention have been described in detail with reference to the drawings. However, the specific configuration is not limited to the embodiments, and the design can be changed without departing from the scope of the present invention as defined by the claims. In addition, the above-described embodiments can be combined by utilizing each other's technology as long as there is no particular contradiction or problem in the purpose and configuration.

### List of reference signs

1: power cutting machine, 2: main body,
3: arm, 4: working device,
5: cutting blade, 5A: rotating shaft, 5B: bearing,
10: motor, 11: rear handle, 12: front handle,
13: actuating lever, 14: protecting frame,
20 belt transmission mechanism,
21: drive pulley, 22: driven pulley,
22A: transmission shaft, 22B: bearing,
23: endless belt, 30 brake mechanism,
31: detection mechanism, 31A: mass part,
31B: rotating shaft, 31C: swing lever,
32: tightening mechanism, 32A: tightening belt,
32B: bending members,
32C: spring, 32D: rotating shaft,
32E: fixed shaft, 32: torque limiter

## Claims

1. A power cutting machine comprising:
a main body including a motor;
an arm connected to the main body at its base end and including a belt transmission mechanism configured to transmit drive power of the motor; and
a working device connected to the head end of the arm and including a cutting blade configured to be rotated by power transmitted via the belt transmission mechanism,
wherein the working device includes a brake mechanism,
**characterized in that** said brake mechanism is configured to be actuated when the cutting blade is subject to overload and apply a brake to the cutting blade.

2. The power cutting machine according to claim 1, wherein the main body includes a handle to be held for performing work.

3. The power cutting machine according to claim 1 or 2, wherein the brake mechanism includes:
a detection mechanism configured to detect the working device bouncing up; and
a tightening mechanism configured to be actuated upon detection of the detection mechanism to tighten a tightening belt wound around a driven pulley of the belt transmission mechanism.

4. The power cutting machine according to claim 1 or 2, wherein the brake mechanism includes a torque limiter provided between a rotating shaft of the cutting blade and a transmission shaft of the driven pulley.

## Patentansprüche

1. Elektrische Schneidemaschine, umfassend:
einen Hauptkörper, der einen Motor umfasst;
einen Arm, der mit dem Hauptkörper an seinem Basisende verbunden ist und einen Riemenübertragungsmechanismus umfasst, der konfiguriert ist, um eine Antriebskraft des Motors zu übertragen; und
eine Arbeitsvorrichtung, die mit dem Kopfende des Arms verbunden ist und eine Schneideklinge umfasst, die konfiguriert ist, um durch Kraft, die über den Riemenübertragungsmechanismus übertragen wird, gedreht zu werden,
wobei die Arbeitsvorrichtung einen Bremsmechanismus umfasst, **dadurch gekennzeichnet, dass** der Bremsmechanismus konfiguriert ist, um betätigt zu werden, wenn die Schneideklinge einer Überlastung ausgesetzt ist, und eine Bremse auf die Schneideklinge anzuwenden.

2. Elektrische Schneidemaschine nach Anspruch 1, wobei der Hauptkörper einen Griff umfasst, der zum Durchführen von Arbeit zu halten ist.

3. Elektrische Schneidemaschine nach Anspruch 1 oder 2,
wobei der Bremsmechanismus umfasst:
einen Erfassungsmechanismus, der konfiguriert ist, um das Hochspringen der Arbeitsvorrichtung zu erfassen; und
einen Festziehmechanismus, der konfiguriert ist, um bei Erfassen des Erfassungsmechanismus betätigt zu werden, um einen Festziehriemen festzuziehen, der um eine angetriebene Riemenscheibe des Riemenübertragungsmechanismus gewickelt ist.

4. Elektrische Schneidemaschine nach Anspruch 1 oder 2, wobei der Bremsmechanismus einen Drehmomentbegrenzer umfasst, der zwischen einer Drehwelle der Schneideklinge und einer Getriebewelle der angetriebenen Riemenscheibe vorgesehen ist.

## Revendications

1. Machine à couper électrique comprenant :
un corps principal incluant un moteur ;
un bras relié au corps principal au niveau de son extrémité de base et incluant un mécanisme de transmission à courroie configuré pour transmettre une puissance d'entraînement du moteur ; et
un dispositif de travail relié à l'extrémité de tête du bras et incluant une lame de coupe configurée pour être mise en rotation par une puissance transmise via le mécanisme de transmission à courroie,
dans laquelle le dispositif de travail inclut un mécanisme de frein, **caractérisée en ce que** ledit mécanisme de frein est configuré pour être actionné lorsque la lame de coupe est soumise à une surcharge et appliquer un frein sur la lame de coupe.

2. Machine à couper électrique selon la revendication 1, dans laquelle le corps principal inclut une poignée devant être tenue pour effectuer un travail.

3. Machine à couper électrique selon la revendication 1 ou 2,
dans laquelle le mécanisme de frein inclut :
un mécanisme de détection configuré pour détecter le rebondissement du dispositif de travail ; et
un mécanisme de serrage configuré pour être actionné lors de la détection du mécanisme de détection pour serrer une courroie de serrage enroulée autour d'une poulie entraînée du mécanisme de transmission à courroie.

4. Machine à couper électrique selon la revendication 1 ou 2, dans laquelle le mécanisme de frein inclut un limiteur de couple prévu entre un arbre tournant de la lame de coupe et un arbre de transmission de la poulie entraînée.
